# EUROPEAN PATENT SPECIFICATION

(11) **EP 2 250 837 B1**
(45) Date of publication and mention of the grant of the patent: **14.12.2016**
(21) Application number: 09711530.7
(22) Date of filing: 05.02.2009
(51) Int. Cl.: H04W 28/18

(54) **COMMUNICATION APPARATUS, COMMUNICATION METHOD OF A COMMUNICATION APPARATUS AND COMPUTER-READABLE STORAGE MEDIUM**
KOMMUNIKATIONSVORRICHTUNG, KOMMUNIKATIONSVERFAHREN EINER KOMMUNIKATIONSVORRICHTUNG UND COMPUTERLESBARES SPEICHERMEDIUM
APPAREIL DE COMMUNICATION, PROCÉDÉ DE COMMUNICATION D'UN APPAREIL DE COMMUNICATION ET SUPPORT DE STOCKAGE LISIBLE PAR ORDINATEUR

(30) Priority: 22.02.2008 JP 2008041492; 12.03.2008 JP 2008062781
(43) Date of publication of application: 17.11.2010
(73) Proprietor: Canon Kabushiki Kaisha, Tokyo 146-8501 (JP)
(72) Inventor: SAKAI, Tatsuhiko, Tokyo 146-8501 (JP)
(74) Representative: Garner, Jonathan Charles Stapleton
(86) International application number: PCT/JP2009/052356
(87) International publication number: WO 2009/104513

(56) References cited:
- EP-A1- 1 775 914
- JP-A- 2001 077 821
- JP-A- 2006 270 410
- JP-A- 2006 270 410
- US-A1- 2006 203 837
- US-A1- 2006 246 941
- US-A1- 2007 223 670

## Description

### TECHNICAL FIELD

The present invention relates to a communication apparatus, a control method of the communication apparatus, a computer program, and a storage medium.

### BACKGROUND ART

With wireless communication typified by a wireless LAN compliant with the IEEE 802.11 series of standards, there are a great many setting items that it is necessary to set prior to use.

In terms of the setting items, for example, there are communication parameters required for performing wireless communication such as an SSID that serves as a network identifier, an encryption method, an encryption key, an authentication method and an authentication key, with it being extremely troublesome for the user to set these manually.

In view of this, automatic setting methods for readily setting communication parameters in wireless devices have been devised by various manufactures. These automatic setting methods automatically perform setting of communication parameters by providing communication parameters from one device to another device using procedures predetermined between the connected devices as well as messages.

An example of automatic communication parameter setting is disclosed in Wi-Fi CERTIFIED™ for Wi-Fi Protected Setup: Easing the User Experience for Home and Small Office Wi-Fi® Networks (http://www.wi-fi.org/wp/wifi-protected-setup; hereinafter, Wi-Fi Protected Setup document).

US 2007/0043844 discloses an example of the automatic setting of communication parameters for ad hoc wireless LAN communication (hereinafter ad hoc communication).

In US 2007/0043844, a device that performs ad hoc communication determines a device that provides communication parameters (hereinafter, providing apparatus) from among devices participating in a network, and the providing apparatus provides communication parameters to other devices (hereinafter, receiving apparatuses).

By utilizing automatic setting of communication parameters, the user is thus able to set communication parameters automatically with a simple operation.

Here, the content of communication parameters provided as a result of automatic communication parameter setting will be considered.

With infrastructure communication, communication parameters set in an access point, being information such an SSID, an encryption method, an encryption key, an authentication method and an authentication key, are provided to terminals. With the communication parameters thus provided to terminals, the same content is always provided as long as the access point settings are not changed.

On the other hand, with ad hoc communication, a problem with wireless communication security potentially arises when communication parameters having the same content are always provided by a providing apparatus to receiving apparatuses, similarly to infrastructure communication.

For example, in the case where communication parameters provided by a providing apparatus to a receiving apparatus during one communication are provided to a different receiving apparatus during another communication, two receiving apparatuses not intending to communicate directly may possibly exist on the same network.

When devices unrelated to the communication exist on a network, a device may possibly communicate with an unintended device or risk having wireless communication intercepted by an unintended device. One conceivable method of solving this problem is to change the provided communication parameters whenever automatic setting of communication parameters is performed.

On the other hand, when performing communication with three or more devices, for instance, the providing apparatus may want to provide the same communication parameters to a plurality of receiving apparatuses. In this case, two or more receiving devices will not be able to participate in the same network if the communication parameters that the providing apparatus provides to the receiving apparatuses are changed whenever automatic setting is performed, adversely affecting usability.

EP1775914 teaches that a wireless terminal searches a network using a first SSID and a second SSID, and then sets a communication parameter using a first communication parameter setting method if it finds a network of the first SSID, while sets a communication parameter using a second communication parameter setting if it finds a network of the second SSID. Also, EP1775914 teaches that the wireless terminal switches to a manual communication parameter setting method if it cannot find networks of the first SSID and the second SSID.

JP 2006 270410 teaches that a video device generates a new SSID if it determines to change a network which the device is in, and then notifies a television apparatus of the generated SSID. Also JP 2006 270410 teaches that the video apparatus and the television apparatus set a new SSID respectively, and moves to a use of a new network.

US2006/0203837 discloses that a wireless device listens for a network beacon to see if it can hear a network coordinator which serves to control the operation of a network and to determine whether the network coordinator has been found. The wireless device joins the network if it finds the network coordinator and listens for a probe command if it does not find the network coordinator. US2006/0203837 also discloses that the wireless device starts a new network if it does not hear the probe command.

### DISCLOSURE OF INVENTION

An object of the present invention is to solve the problems that arise in the case where a providing apparatus performs communication parameter setting. For example, an object of the present invention is to prevent (inhibit) devices unrelated to the communication from existing on a network as a result of the providing apparatus always providing the same communication parameters to receiving apparatuses.

According to a first aspect of the present invention there is provided a communication apparatus according to claim 1.

According to a second aspect of the present invention there is provided a communication method according to claim 10. According to a third aspect of the present invention there is provided a computer-readable storage medium according to claim 11.

Further features of the present invention will become apparent from the following description of exemplary embodiments (with reference to the attached drawings).

### BRIEF DESCRIPTION OF DRAWINGS

FIG. 1 is a block diagram constituting a terminal.
FIG. 2 is a software functional block diagram of a providing apparatus in a preferred embodiment of the present invention.
FIG. 3 is a software functional block diagram of a receiving apparatus in the preferred embodiment.
FIG. 4 is a configuration diagram of a network in the preferred embodiment.
FIG. 5 is a flowchart representing an operation of a communication parameter selection process of the providing apparatus in the preferred embodiment.
FIG. 6 is a flowchart representing an operation of an existence determination process of the providing apparatus in the preferred embodiment.
FIG. 7 is a flowchart representing an operation of an automatic communication parameter setting process of the providing apparatus in the preferred embodiment.
FIG. 8 is a flowchart representing an operation of an automatic communication parameter setting process of the receiving apparatus in the preferred embodiment.
FIG. 9 is a first sequence diagram representing the operations of a terminal A, a terminal B and a terminal C in the preferred embodiment.
FIG. 10 is a second sequence diagram representing the operations of the terminal A, the terminal B and the terminal C in the preferred embodiment.

### BEST MODE FOR CARRYING OUT THE INVENTION

### First Embodiment

A communication apparatus according to the present invention will hereinafter be described in detail with reference to the drawings. Hereinafter, an example using a wireless LAN system compliant with the IEEE 802.11 series of standards will be described, although the mode of communication is not necessarily limited to a wireless LAN compliant with IEEE 802.11.

A hardware configuration in a preferred case of the present embodiment will now be described.

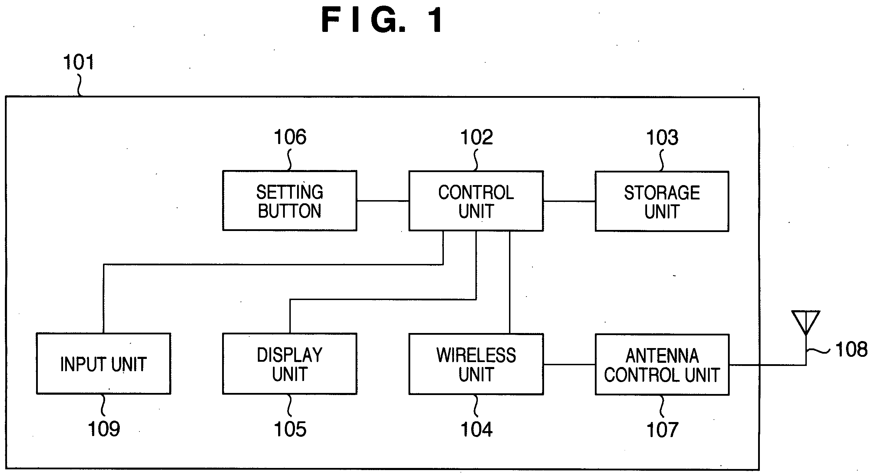

FIG. 1 is a block diagram representing an exemplary configuration of terminals that will be discussed below. Reference numeral 101 denotes the terminal as a whole. Reference numeral 102 denotes a control unit that performs overall control of the terminal by executing control programs stored in a storage unit 103. The control unit 102 also controls the setting of communication parameters with another terminal. Reference numeral 103 denotes a storage unit that stores control programs executed by the control unit 102 and various types of information such as communication parameters. Various operations (discussed below) are performed as a result of the control unit 102 executing the control programs stored in the storage unit 103.

Reference numeral 104 denotes a wireless unit for performing wireless communication. Reference numeral 105 denotes a display unit that performs various types of display, and has a function capable of visually recognizable information output such as an LCD or LED and/or audio output such as a speaker.

Reference numeral 106 denotes a setting button that provides a trigger for starting communication parameter setting. The control unit 102 starts a communication parameter setting operation (discussed below) when operation of the setting button 106 by a user is detected. Reference numeral 107 denotes an antenna control unit, and reference numeral 108 denotes an antenna. Reference numeral 109 is an input unit.

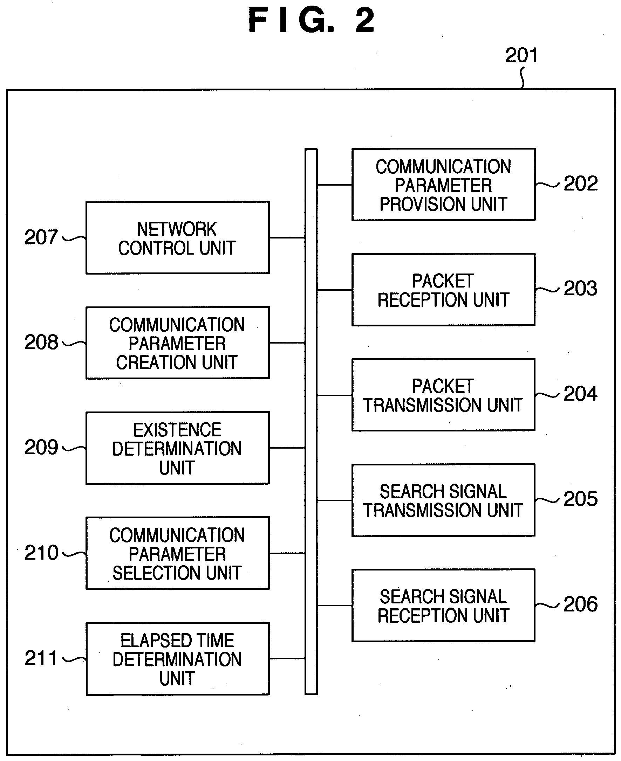

FIG. 2 is a block diagram representing an exemplary configuration of software functional blocks executed by a terminal (hereinafter, providing apparatus) that provides communication parameters with a communication parameter setting operation (discussed below).

Reference numeral 201 denotes the terminal as a whole. Reference numeral 202 denotes a communication parameter provision unit that performs a communication parameter provision process.

In the present embodiment, communication parameters required in order to perform wireless communication such as an SSID that serves as a network identifier, an encryption method, an encryption key, an authentication method and an authentication key are provided to another terminal.

Also, in the present embodiment, when a communication parameter is provided to another terminal, the providing apparatus stores the provided communication parameter in the storage unit 103 as the latest communication parameter provided to a receiving apparatus (hereinafter, provided parameter). Note that the provided parameter stored in the storage unit 103 can also be referred to as the last communication parameter provided out of the communication parameters already provided by the providing apparatus.

Reference numeral 203 denotes a packet reception unit that receives packets related to various types of communication. Reference numeral 204 denotes a packet transmission unit that transmits packets related to various types of communication.

Reference numeral 205 denotes a search signal transmission unit that controls transmission of a device search signal such as a probe request. Note that a probe request can also be referred to as a network search signal for searching for a desired network. Transmission of a probe request (discussed below) is performed by the search signal transmission unit 205. Transmission of a probe response constituting a response signal to a received probe request is also performed by the search signal transmission unit 205.

Reference numeral 206 denotes a search signal reception unit that controls reception of a device search signal such as a probe request from another terminal. Reception of a probe request (discussed below) is performed by the search signal reception unit 206. Reception of a probe response is also performed by the search signal reception unit 206. Note that various types of information (self information) of the source device are added to the device search signal and the response signal.

Reference numeral 207 denotes a network control unit that controls establishing, joining and leaving a network. Establishing, joining and leaving a wireless LAN network (discussed below) are controlled by the network control unit 207. Note that establishing a network can also be referred to as creating or forming a network. With ad hoc communication, a network is established by commencing transmission of a beacon.

Reference numeral 208 denotes a communication parameter creation unit that newly creates communication parameters. In the present embodiment, the communication parameter creation unit 208 newly creates communication parameters required in order to perform wireless communication such as an SSID that serves as a network identifier, an encryption method, an encryption key, an authentication method and an authentication key. A new communication parameter creation process (discussed below) is performed by the communication parameter creation unit 208.

Reference numeral 209 denotes an existence determination unit that determines whether a network established by the providing apparatus exists. An existence determination process (discussed below) is performed by the existence determination unit 209. Note that the existence determination unit 209 is also able to determine whether a receiving apparatus to which the providing apparatus has provided a communication parameter still exists in the network.

Reference numeral 210 denotes a communication parameter selection unit that selects a communication parameter to be provided to a receiving apparatus. A communication parameter selection process (discussed below) is performed by the communication parameter selection unit 210.

Reference numeral 211 denotes an elapsed time determination unit that measures elapsed time from when a communication parameter was last provided to a receiving apparatus, and determines whether the elapsed time exceeds a predetermined maximum elapsed time. Note that the maximum elapsed time may be prestored in the device or may be settable by a user. An elapsed time determination process (discussed below) is performed by the elapsed time determination unit 211.

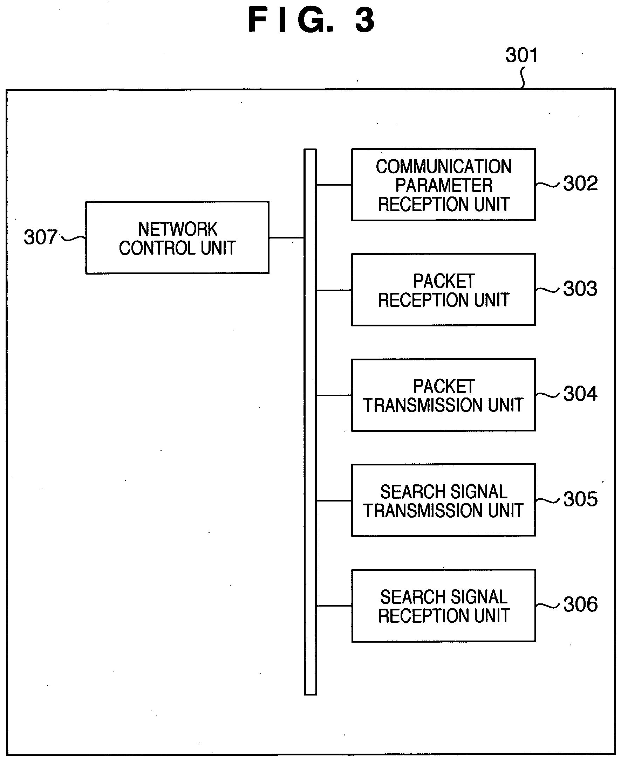

FIG. 3 is a block diagram representing an exemplary configuration of software functional blocks executed by a terminal that receives communication parameters (hereinafter, receiving apparatus) with a communication parameter setting operation (discussed below).

Reference numeral 301 denotes the terminal as a whole. Reference numeral 302 denotes a communication parameter reception unit that performs a communication parameter reception process. In the present embodiment, communication parameters required in order to perform wireless communication such as an SSID that serves as a network identifier, an encryption method, an encryption key, an authentication method and an authentication key are received from a providing apparatus.

Reference numeral 303 denotes a packet reception unit that receives packets related to various types of communication. Reference numeral 304 denotes a packet transmission unit that transmits packets related to various types of communication.

Reference numeral 305 denotes a search signal transmission unit that controls transmission of a device search signal such as a probe request. Note that a probe request can also be referred to as a network search signal for searching for a desired network. Transmission of a probe request (discussed below) is performed by the search signal transmission unit 305. Transmission of a probe response constituting a response signal to a received probe request is also performed by the search signal transmission unit 305.

Reference numeral 306 denotes a search signal reception unit that controls reception of a device search signal such as a probe request from another terminal. Reception of a probe request (discussed below) is performed by the search signal reception unit 306. Reception of a probe response is also performed by the search signal reception unit 306.

Reference numeral 307 denotes a network control unit that controls joining and leaving a network. Joining and leaving a network (discussed below) are controlled by the network control unit 307.

Note that all of the software functional blocks are interrelated in terms of both software and hardware. The above functional blocks are merely illustrative, with it being possible to constitute a plurality of the functional blocks as a single functional block, or to further divide any of the functional blocks into blocks that perform a plurality of functions.

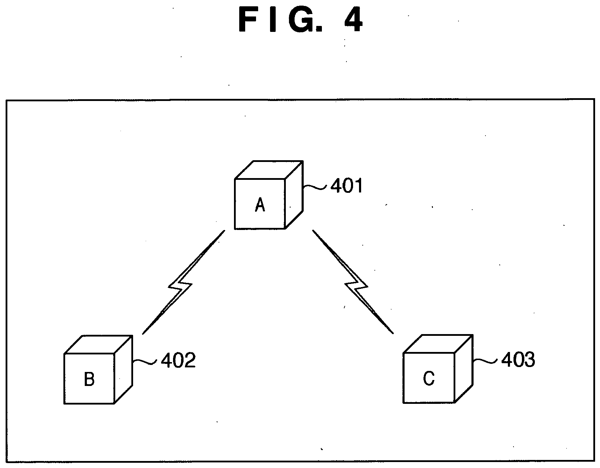

FIG. 4 shows a terminal A 401 (hereinafter terminal A), a terminal B 402 (hereinafter terminal B), and a terminal C 403 (hereinafter terminal C).

The terminals A, B and C are each provided with an IEEE 802.11 wireless LAN communication function, and perform wireless communication using ad hoc communication with one another.

The terminal A is a providing apparatus and has the configuration of FIGS. 1 and 2 described earlier. The terminals B and C are receiving apparatuses and have the configuration of FIGS. 1 and 3.

Here, the case where automatic communication parameter setting is performed between the terminals A and C after automatic communication parameter setting has been performed between the terminals A and B will be considered.

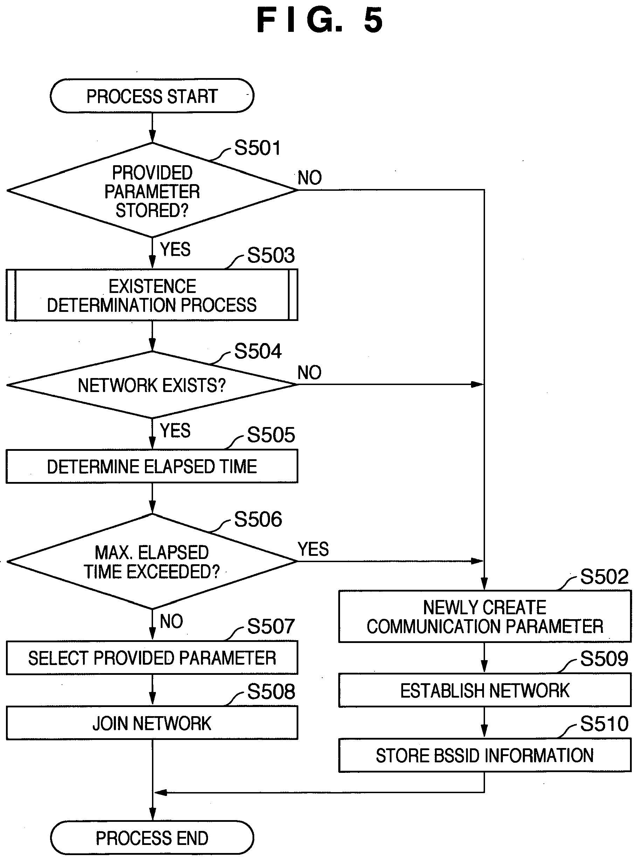

FIG. 5 is an operation flowchart illustrating a process of selecting a communication parameter to provide to a receiving apparatus, when a providing apparatus executes an automatic communication parameter setting process. The process shown in FIG. 5 is started when the setting button 106 is operated in the providing apparatus.

The communication parameter selection unit 210 refers to the storage unit 103 and confirms whether a provided parameter is stored (S501). If a provided parameter is not stored in the storage unit 103, the communication parameter selection unit 210 activates the communication parameter creation unit 208, and newly creates a communication parameter to provide to a receiving apparatus (S502).

If a provided parameter is stored in the storage unit 103, the communication parameter selection unit 210 activates the existence determination unit 209 (S503).

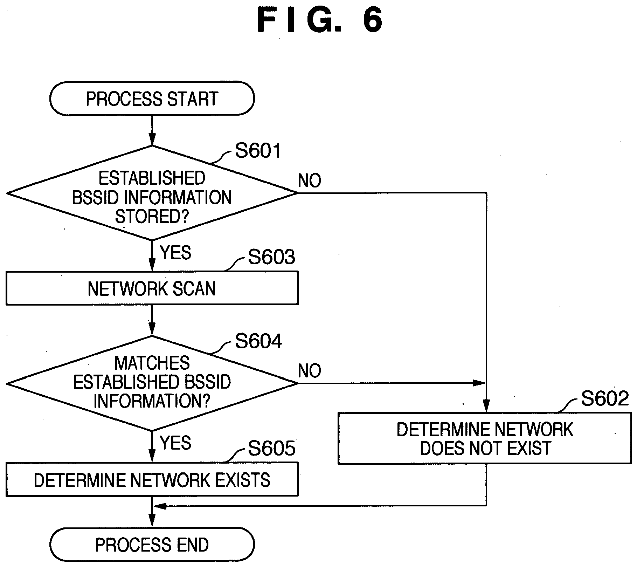

The existence determination unit 209 executes the existence determination process of FIG. 6 (discussed below), and determines whether the network established by the providing apparatus using the provided parameter exists (S504).

If, as a result of the existence determination process, it is determined that the network exists, the communication parameter selection unit 210 causes the elapsed time determination unit 211 to determine the elapsed time (S505).

The elapsed time determination unit 211 determines whether the time elapsed from when the provided parameter was provided to a receiving apparatus exceeds a predetermined maximum elapsed time (S506).

If the time elapsed from when the provided parameter was provided does not exceed the predetermined maximum elapsed time, the communication parameter selection unit 210 selects the provided parameter stored in the storage unit 103 as the communication parameter to be provided (S507).

If the time elapsed from when the provided parameter was provided does exceed the predetermined maximum elapsed time, the communication parameter selection unit 210 activates the communication parameter creation unit 208, and newly creates a communication parameter to be provide to a receiving apparatus (S502).

Here, the reason for performing the determination process of S506 will be described. It is conceivable, for example, that despite the providing apparatus having left the network due to a user operation such as being powered off after providing a communication parameter, the receiving apparatus continues to participate in the network due to the user having forgotten to operate the receiving apparatus. Assume that the setting button is pressed in this situation after a certain amount of time has elapsed, in order for the providing apparatus to perform communication with another receiving apparatus. In this case, if the provided parameter is provided to the other receiving apparatus after it has been determined that the network established with the provided parameter still exists, a plurality of receiving apparatuses not intending to communicate directly will end up existing on the same network. As a countermeasure to such a situation, the providing apparatus selects a newly created communication parameter as the communication parameter to be provided, after a fixed period of time has elapsed, even if the network established using the provided parameter exists. A reduction in security due to the same communication parameter being used for an extended period of time can thereby be prevented.

If the providing apparatus has left the network, the network control unit 207 selects the provided parameter in step S507 and then joins the network using the provided parameter (S508).

If, as a result of the existence determination process of S504, it is determined that the network does not exist, the communication parameter selection unit 210 activates the communication parameter creation unit 208 and newly creates a communication parameter to provide to a receiving apparatus (S502).

After a communication parameter has been newly created in S502, the network control unit 207 establishes a network using the created communication parameter (S509).

After establishing the network, the network control unit 207 stores basic service set identifier (BSSID) information of the established network in the storage unit 103 as established BSSID information (S510). Here, a BSSID is a network identifier having a random value generated by an apparatus that establishes a network. Consequently, a different BSSID is set whenever a network is established, even if communication parameters such as the SSID, encryption method, encryption key, authentication method and authentication key are set with the same content. Consequently, the BSSID can be used in determining whether a network established using a provided parameter still exists, as will be discussed below with FIG. 6. Note that the SSID, which differs from the BSSID, is a network identifier that can be preset in a device or set arbitrarily by a user. As clear from the above description, the BSSID is not a communication parameter that is provided from a providing apparatus to a receiving apparatus as a result of the automatic setting process.

As noted above, by confirming whether a network established using a provided parameter still exists when the setting button is operated, the providing apparatus determines whether a receiving apparatus to which a communication parameter has already been provided has left the network.

If the network still exists, it is conceivable that automatic communication parameter setting with another receiving apparatus was instructed, or that the providing apparatus has left the network temporarily due to interference or the like. This process results in the provided parameter being selected in both cases as the communication parameter to be provided. In the case where automatic communication parameter setting with another receiving apparatus was instructed, the provided parameter will be provided to the other receiving apparatus, enabling data communication to be performed with three or more apparatuses. In the case where the providing apparatus has left the network temporarily due to interference or the like, preparation can be made for a communication apparatus to newly join the network.

If the network established by the providing apparatus using the provided parameter does not exist, it is conceivable that data communication on the network using the provided parameter was completed, or that the receiving apparatus has left the network. In this case, it is possible for the providing apparatus to only allow a communication apparatus related to a desired communication process to join the network, by newly creating a communication parameter to be provided. In other words, the existence of devices unrelated to the communication in a network as a result of the same communication parameter being provided to a plurality of apparatuses not intending to communicate directly can be prevented (inhibited), enabling communication security to be improved.

Note that while it is assumed in the present embodiment that the process of FIG. 5 is started when the setting button 106 is operated, a similar effect is obtained even if the process of FIG. 5 is performed when the wireless communication unit of the providing apparatus is activated.

Also, the processing of S505 and S506 may be omitted. The providing apparatus is thereby able decide whether to use the provided parameter or a newly created parameter as the parameter to be provided, simply by determining whether the network established using the provided parameter still exists. When the processing of S505 and S506 is omitted, the provided parameter may be disabled after a prescribed period of time has elapsed from when the provided parameter is stored. In this case, disabling the provided parameter allows a newly created provided parameter to be determined as the parameter to be provided, even if the provided parameter is stored. A reduction in security can thereby be prevented.

FIG. 6 is a flowchart illustrating a process (S504 in FIG. 5) of determining whether a network established by the providing apparatus using a provided parameter exists.

The existence determination unit 209 refers to the storage unit 103 and confirms whether established BSSID information is stored (S601).

If established BSSID information is not stored, the existence determination unit 209 determines that the network established by the providing apparatus using the provided parameter does not exist, and ends the processing (S602).

If established BSSID information is stored, the existence determination unit 209 acquires the BSSID information of nearby networks by scanning for networks (S603). Specifically, the providing apparatus acquires the BSSID information of nearby networks by transmitting a probe request and receiving a probe response from nearby networks.

After scanning, the existence determination unit 209 compares the BSSID information acquired at S603 with the established BSSID information (S604).

If BSSID information matching the established BSSID information exists in the BSSID information acquired at S603, the existence determination unit 209 determines that the network established using the provided parameter exists (S605).

If BSSID information matching the established BSSID information does not exist in the BSSID information acquired at S603, the existence determination unit 209 determines that the network established using the provided parameter does not exist (S602).

By performing the determination process using the BSSID, the providing apparatus can thus reliably determine whether a network established using a provided parameter still exists.

Note that it is conceivable that a communication unit of a peripheral device is in power saving mode when the scan is executed at step S603 and unable to reply to a probe request transmitted by the providing apparatus. To deal with such a situation, the providing apparatus may execute the scan after the power saving mode in the peripheral device has been cancelled, by transmitting a signal for cancelling the power saving mode to the peripheral device prior to executing step S603.

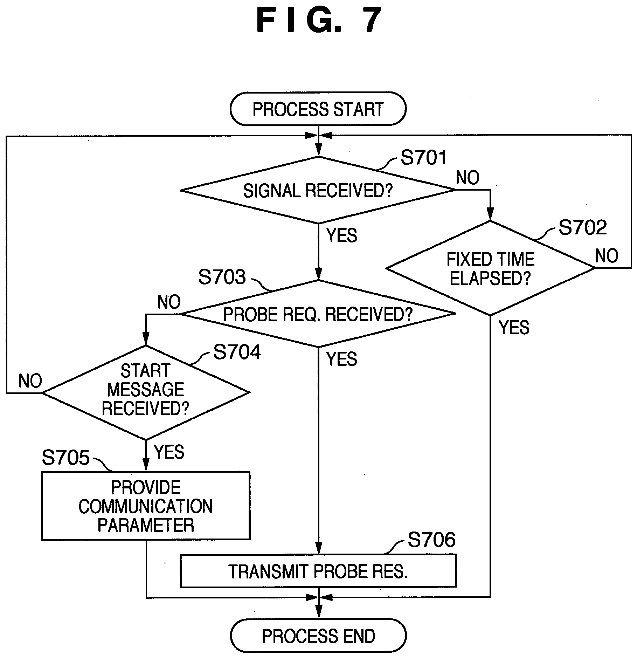

FIG. 7 is an operation flowchart illustrating a process of providing a communication parameter to a receiving apparatus, when the providing apparatus executes an automatic communication parameter setting process. The process shown in FIG. 7 is started when the communication parameter selection process shown in FIG. 5 is completed in the providing apparatus.

The providing apparatus waits for a fixed time period for a wireless signal to be transmitted from a peripheral apparatus (S701). If the desired signal is not received before the fixed time period elapses, the processing is ended (S702). If the fixed time period has not elapsed, the processing returns to step S701, and the providing apparatus continues to wait for a wireless signal.

When a wireless signal is received, the search signal reception unit 206 confirms whether the received signal is a probe request (S703).

If, at step S703, the received signal is not a probe request, the communication parameter provision unit 202 confirms whether the received signal is an automatic communication parameter setting start message (S704).

If the received signal is an automatic communication parameter setting start message, the communication parameter provision unit 202 provides a communication parameter to the receiving apparatus that transmitted the start message (S705).

At step S705, the communication parameter provision unit 202, having provided a communication parameter to the receiving apparatus, stores the provided communication parameter in the storage unit 103 as the latest communication parameter to be provided to a receiving apparatus (above "provided parameter"). At this time, the elapsed time determination unit 211 is activated, and starts measuring elapsed time from when the provided parameter is stored.

If the received signal is not an automatic communication parameter setting start message, the processing returns to step S701, and the providing apparatus again waits for a wireless signal.

If it is determined at step S703 that the received signal is a probe request, the search signal transmission unit 205 sends back a probe response containing additional information indicating automatic communication parameter setting (S706). Note that a probe response containing additional information indicating automatic communication parameter setting is sent back when the automatic setting process is being executed. If the automatic setting process is not being executed, a probe response without additional information indicating automatic communication parameter setting attached is sent back.

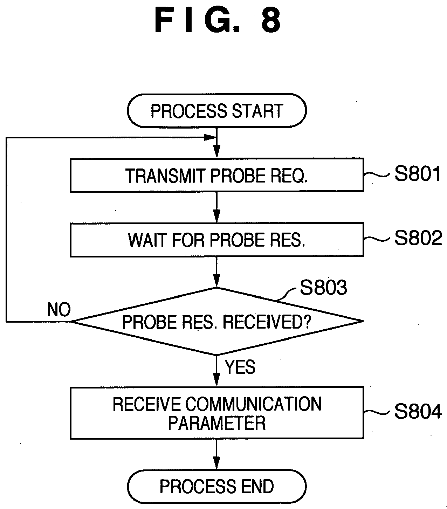

FIG. 8 is an operation flowchart illustrating a process when a receiving apparatus executes an automatic communication parameter setting process. The process shown in FIG. 8 is started when the setting button 106 is operated by a user in a receiving apparatus.

After the process has started, the search signal transmission unit 305 transmits a probe request (S801).

Subsequently, the search signal reception unit 306 waits for a fixed time period for a probe response containing additional information indicating automatic communication parameter setting to be transmitted from a providing apparatus (S802).

If a probe response with additional information is not received before the fixed time period elapses, the processing returns to step S801, and the search signal transmission unit 305 again transmits a probe request (S803).

If a probe response with additional information is received, the communication parameter reception unit 302 specifies the identifier of the network established by the providing apparatus from the probe response. After specifying the identifier, the communication parameter reception unit 302 joins the network, and requests the providing apparatus to provide a communication parameter. This request is made by transmitting an automatic communication parameter setting start message. The communication parameter reception unit 302 then receives a communication parameter from the providing apparatus and stores the received communication parameter in the storage unit 103 (S804).

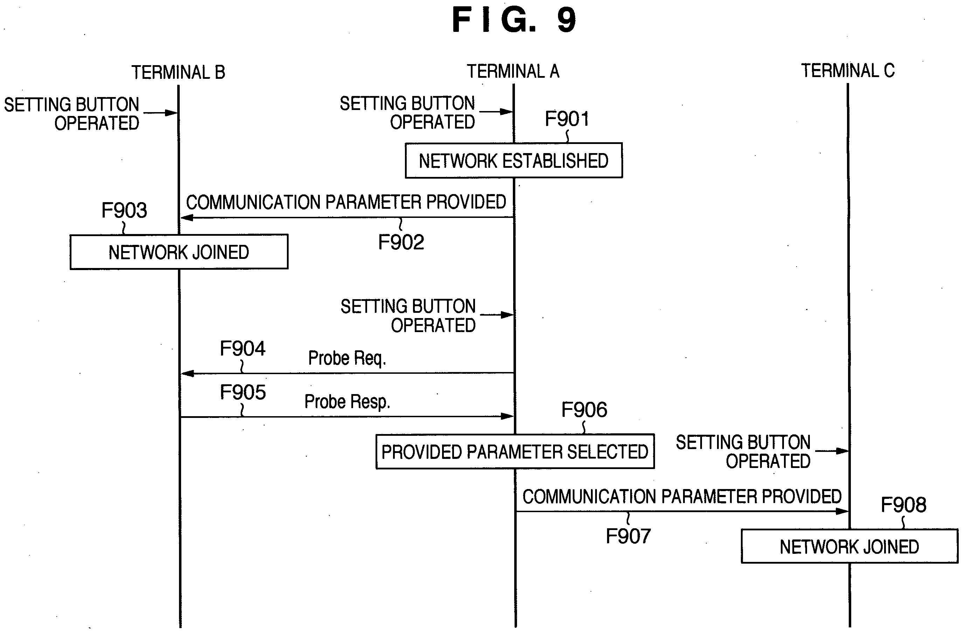

FIG. 9 is a sequence diagram illustrating exemplary operations of the terminals in the present embodiment.

FIG. 9 shows an example in which the terminals A, B and C participate in the same network as a result of the same communication parameter being provided from the terminal A to the terminals B and C by automatic communication parameter setting.

When the setting button 106 of the terminals A and B are operated by a user, the terminal A establishes a network (F901) and a communication parameter is provided from the terminal A to the terminal B (F902) as a result of the processes of FIGS. 5, 6, 7 and 8. Subsequently, the terminal B joins the network (F903). Note that in the FIG. 9 example the terminal A is assumed to provide a newly created communication parameter to the terminal B. Also, in the terminal A, the communication parameter provided to the terminal B is stored as a provided parameter, and the BSSID of the network established at F901 is stored as an established BSSID.

The terminal A starts the processes of FIGS. 5 and 6 when the setting button of the terminal A is operated by a user after the communication parameter is provided to the terminal B. The terminal A executes a scan (F904), and receives a probe response from the terminal B (F905). The terminal A then confirms that the network of the communication parameter provided to the terminal B at F902 still exists by comparing the BSSID information included in the received probe response with the stored BSSID information. The terminal A thereby selects the communication parameter stored as the provided parameter, that is, the same communication parameter as the communication parameter provided to the terminal B, as the communication parameter to be provided (F906).

When the setting button of the terminal C is operated by a user, a communication parameter is provided from the terminal A to the terminal C as a result of the processes of FIGS. 7 and 8 (F907). Here, the same communication parameter as the communication parameter provided to the terminal B is provided by the terminal A to the terminal C. The terminal C, on receipt of the communication parameter, joins the network using the communication parameter (F908).

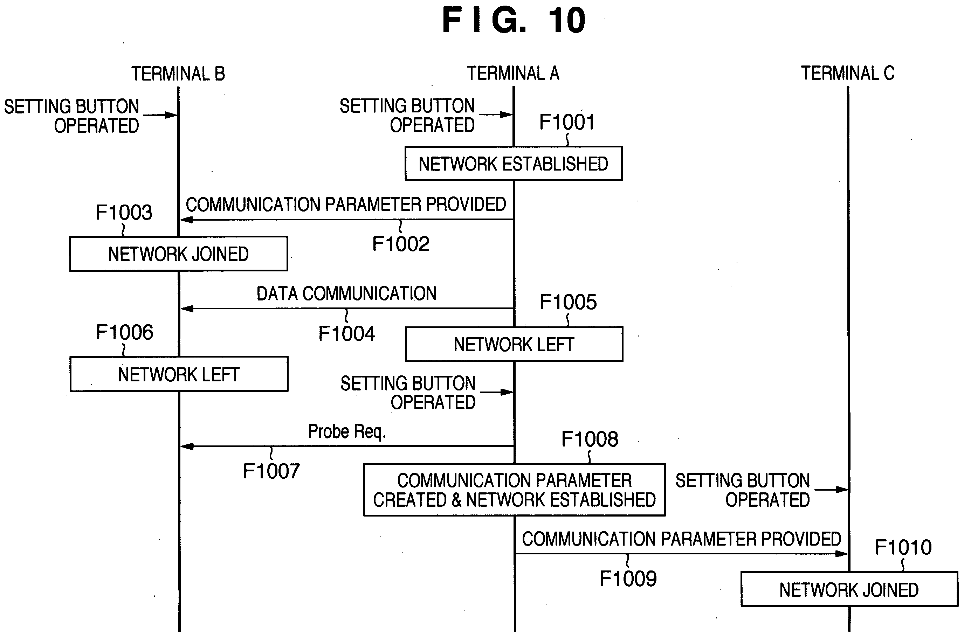

FIG. 10 is a sequence diagram illustrating exemplary operations of the terminals in the present embodiment.

FIG. 10 shows an example in which a communication parameter is provided from the terminal A to the terminal B, and then a communication parameter is provided from the terminal A to the terminal C after data communication between the terminals A and B is completed.

When the setting button of the terminals A and B are operated by a user, the terminal A establishes a network (F1001) and a communication parameter is provided from the terminal A to the terminal B (F1002) as a result of the processes of FIGS. 5, 6, 7 and 8. Subsequently, the terminal B joins the network (F1003). Note that in the FIG. 10 example the terminal A is assumed to provide a newly created communication parameter to the terminal B. Also, in the terminal A, the communication parameter provided to the terminal B is stored as a provided parameter, and the BSSID of the network established at F1001 is stored as an established BSSID.

Data communication is performed between the terminals A and B after the communication parameter is provided to the terminal B (F1004). After data communication is completed, the terminals A and B leave the network on which data communication was performed (F1005, F1006).

Subsequently, the terminal A starts the processes of FIGS. 5 and 6 when the setting button of the terminal A is operated. The terminal A executes a scan (F1007), and confirms that the network of the communication parameter provided to the terminal B at F1002 does not exist.

The terminal A thereby selects a newly created communication parameter as the communication parameter to be provided, and establishes a network using the created communication parameter (F1008).

When the setting button of the terminal C is operated by a user, a communication parameter is provided from the terminal A to the terminal C as a result of the processes of FIGS. 7 and 8 (F1009). Here, the newly created communication parameter is provided by the terminal A to the terminal C. The terminal C, on receipt of the communication parameter, joins the network using the communication parameter (F1010).

Thus, depending on whether the network established using a provided parameter exists, the providing apparatus selects whether to use the provided parameter (first communication parameter) or a newly created parameter (second communication parameter) as the communication parameter to be provided.

If the network established using a provided parameter does exist, the providing apparatus is, after providing a communication parameter to one receiving apparatus, further able to provide the same communication parameter to another receiving apparatus, by selecting the provided parameter. Also, even if the providing apparatus leaves the network temporality after providing a communication parameter due to interference or the like, the providing apparatus is able to rejoin the network and provide the communication parameter of the network. Therefore, the automatic setting process no longer needs to be performed again from the beginning with all of the receiving apparatuses.

If the network established using a provided parameter does not exist, the providing apparatus is able to prevent the same communication parameter from being provided to a plurality of receiving apparatuses not intending to perform data communication, by selecting a newly created communication parameter. A reduction in security due to an unintended apparatus participating in the same network can thereby be prevented.

As note above, the providing apparatus can appropriately restrict participation in the network depending on the situation to only those communication apparatuses related to the communication process.

That is, a device unrelated to the communication can be appropriately prevented (inhibited) from existing in a network depending on the situation, enabling communication security to be improved without compromising usability.

Note that while an example was described in the above embodiment in which a newly created communication parameter is provided in the case of not providing a provided parameter to a receiving apparatus, newly creating a communication parameter is not always necessary. For example, a default communication parameter may be prepared, and provided.

Also, while an example was described in the above embodiment in which a communication parameter for performing communication on a network established by the providing apparatus is provided on the network to a receiving apparatus, a different communication parameter may be provided. In other words, the network providing a communication parameter may differ from the network on which data communication is performed after setting the communication parameter. In this case, in the above existence determination process, it is determined whether a network established using a provided parameter in order to perform data communication still exists. Note that the network for performing data communication may be established by either the providing apparatus or the receiving apparatus. Also, in the elapsed time determination process in this case, the elapsed time from when the parameter is provided may be determined, or the elapsed time from when the provided communication parameter is set may be determined.

Also, while an example was described in the above embodiment in which the roles of the providing apparatus and the receiving apparatus are fixed, it is possible for the roles to change depending on the situation. For example, after receiving a communication parameter from a providing apparatus, a receiving device can, as a providing apparatus, provide a communication parameter to an apparatus seeking to newly join the network. In this case, the communication apparatus determines whether the network established using the communication parameter that was provided exists, and then decides, based on the determination result, whether to use the communication parameter that was provided or a newly created communication parameter as the communication parameter to be provided. In the elapsed time determination process in this case, the elapsed time from when provision of the communication parameter is received or from when the communication parameter that was provided is set may be determined.

In other words, in the present embodiment, it is determined whether a network established using a communication parameter set as a result of a communication parameter setting process performed with another communication apparatus exists. The set communication parameter or a different communication parameter is then provided based on the determination result.

While a preferred embodiment of the present invention has been described above, this is merely an example for illustrating the invention, and is not intended to limit the scope of the invention. The embodiment can be variously modified to the extent that it does not depart from the gist of the invention.

For example, while a probe request and a probe response were used in the description of the above embodiment, the signals transmitted are not limited to these. Any signal is possible, provided that the signal can perform a similar role.

In the above description, a wireless LAN compliant with IEEE 802.11 was given as an example. However, the present invention may be implemented in another wireless medium such as a wireless USB, MBOA, Bluetooth®, UWB or ZigBee. The present invention may also be implemented in a wired communication medium such as power line communication (PLC) or a wired LAN.

Here, MBOA stands for Multiband OFDM Alliance. UWB includes wireless USB, wireless 1394, WINET and the like.

While a network identifier, an encryption method, an encryption key, an authentication method and an authentication key were given as exemplary communication parameters, needless to say, other information may be implemented and other information may also be included in the communication parameters.

The present invention may be achieved by a storage medium storing the program code of software for realizing the aforementioned functions being supplied to a system or an apparatus, and a computer (CPU, MPU) in the system or apparatus reading out and executing the program code stored on the storage medium. In this case, the actual program code read out from the storage medium realizes the functions of the foregoing embodiment, and the storage medium storing the program code constitutes the present invention.

Storage media that can be used for supplying the program code include, for example, flexible disk, hard disk, optical disk, magneto-optical disk, CD-ROM, CD-R, magnetic tape, nonvolatile memory card, ROM, and DVD.

The aforementioned functions are not only realized as a result of a computer executing the read program code. The aforementioned functions may also be realized as a result of an OS running on a computer performing part or all of the actual processing based on instructions in the program code. OS stands for operating system.

The aforementioned functions may further be realized as a result of the program code read out from the storage medium being written to a memory provided in a function expansion board inserted in a computer or a function expansion unit connected to a computer, and a CPU provided in the function expansion board or the function expansion unit performing part or all of the actual processing based on instructions in the program code.

As described above, the present invention enables automatic setting of communication parameters to be executed most securely without compromising usability.

While the present invention has been described with reference to exemplary embodiments, it is to be understood that the invention is not limited to the disclosed exemplary embodiments but only by the following claims.

## Claims

1. A communication apparatus (401) comprising:
executing means arranged to execute automatic communication parameter setting process between the communication apparatus and a first apparatus (42);
first storage means (103) arranged to store a first communication parameter shared between the communication apparatus and the first apparatus by the automatic communication parameter setting process executed by the executing means, wherein the first communication parameter is for joining a first network and includes at least one of an encryption method, an encryption key, an authentication method, and an authentication key; and
determining means arranged to determine, if the first communication parameter is stored in the storage means (103), whether a first network established using the first communication parameter exists,
creating means arranged to create a second network different from the first network in a case where the determining means determines that the first network does not exist; and
providing means arranged to provide the first communication parameter to a second apparatus (403), if the determining means determines that the first network exists, and to provide a second communication parameter that differs from the first communication parameter and is used for joining the second network to the second apparatus (403), if the determining means determines that the first network does not exist.

2. The communication apparatus (401) according to claim 1, wherein the first communication parameter stored by the first storage means (103) is a communication parameter that was last provided out of communication parameters provided by the providing means.

3. The communication apparatus (401) according to claim 1, wherein the second communication parameter is a communication parameter created by the creation means that includes at least one of an encryption method, an encryption key, an authentication method, and an authentication key.

4. The communication apparatus (401) according to claim 1, further comprising:
second storage means arranged to store a network identifier of the first network established using the first communication parameter; and
acquiring means arranged to search for a nearby network and to acquire a network identifier, wherein
the determining means is arranged to determine whether the first network established using the first communication parameter exists, based on the network identifier stored by the second storage means and the network identifier acquired by the acquiring means.

5. The communication apparatus (401) according to claim 4, wherein the network identifier stored by the second storage means is a random value generated by an apparatus that established the first network using the first communication parameter.

6. The communication apparatus (401) according to claim 1, further comprising measuring means arranged to measure elapsed time from when the communication apparatus provides or is provided the first communication parameter, wherein
the providing means is arranged to provide the first communication parameter to the second apparatus (403), if the determining means determines that the first network exists and the predetermined time has not elapsed from when the communication apparatus provides or is provided the first communication parameter, to provide the second communication parameter to the second apparatus (403), if the determining means determines that the first network exists and the predetermined time has elapsed from when the communication apparatus provides or is provided the first communication parameter, and to provide the second communication parameter to the second apparatus, if the determining means determines that the first network does not exist.

7. The communication apparatus (401) according to claim 1, further comprising measuring means for measuring elapsed time from when the first communication parameter is set, wherein
the providing means is arranged to provide the first communication parameter to the second apparatus (403), if the determining means determines that the first network exists and the predetermined time has not elapsed from when the first communication parameter is set, to provide the second communication parameter to the second apparatus (403), if the determining means determines that the first network exists and the predetermined time has elapsed from when the first communication parameter is set, and to provide the second communication parameter to the second apparatus (403), if the determining means determines that the first network does not exist.

8. The communication apparatus (401) according to claim 1, wherein the providing means is arranged to provide a communication parameter if a user instructs to start automatic communication parameter setting process or if a wireless communication unit of the communication apparatus is activated.

9. The communication apparatus (401) according to claim 1, further comprising instructing means arranged to transmit an instruction for canceling a power saving mode of the first apparatus, wherein
the determining means is arranged to perform the determination after the instruction for the power saving mode of the first apparatus is transmitted by the instructing means.

10. A communication method of a communication apparatus (401), comprising the steps of:
executing an automatic communication parameter setting process between the communication apparatus and a first apparatus;
storing in a storage means a first communication parameter shared between the communication apparatus and the first apparatus by the automatic communication parameter setting process, wherein the first communication parameter is used for joining a first network and includes at least one of an encryption method, an encryption key, an authentication method, and an authentication key; and
determining, if the first communication parameter is stored in the storage means (103), whether the first network established using the first communication parameter exists;
providing the first communication parameter to a second apparatus (403), if it is determined in the determining step that the first network exists, and providing a second communication parameter used for joining the second network to the second apparatus, if it is determined that the first network does not exist.

11. A computer-readable storage medium storing a computer program which, when run on a computer, causes the computer to execute a communication method as claimed in claim 10.

## Patentansprüche

1. Kommunikationsvorrichtung (401), umfassend:
eine Ausführungseinrichtung, ausgebildet zum Ausführen eines automatischen Kommunikationsparametereinstellvorgangs zwischen der Kommunikationsvorrichtung und einer ersten Vorrichtung (42);
eine erste Speichereinrichtung (103), ausgebildet zum Speichern eines ersten Kommunikationsparameters, der durch den durch die Ausführungseinrichtung ausgeführten automatischen Kommunikationsparametereinstellvorgang zwischen der Kommunikationsvorrichtung und der ersten Vorrichtung mitgeteilt worden ist, wobei der erste Kommunikationsparameter zum Verbinden mit einem ersten Netz vorgesehen ist und ein Chiffrierverfahren und/oder einen Chiffrierschlüssel und/oder ein Authentifizierungsverfahren und/oder einen Authentifizierungsschlüssel enthält; und
eine Bestimmungseinrichtung, ausgebildet zum Bestimmen, ob ein unter Verwendung des ersten Kommunikationsparameters aufgebautes erstes Netz vorhanden ist, falls der erste Kommunikationsparameter in der Speichereinrichtung (103) gespeichert ist;
eine Erzeugungseinrichtung, ausgebildet zum Erzeugen eines vom ersten Netz verschiedenen zweiten Netzes, falls die Bestimmungseinrichtung bestimmt, dass das erste Netz nicht vorhanden ist; und
eine Bereitstelleinrichtung, ausgebildet zum Bereitstellen des ersten Kommunikationsparameters für eine zweite Vorrichtung (403), falls die Bestimmungseinrichtung bestimmt, dass das erste Netz vorhanden ist, und zum Bereitstellen eines vom ersten Kommunikationsparameter verschiedenen und zum Verbinden des zweiten Netzes mit der zweiten Vorrichtung (403) verwendeten zweiten Kommunikationsparameters, falls die Bestimmungseinrichtung bestimmt, dass das erste Netz nicht vorhanden ist.

2. Kommunikationsvorrichtung (401) nach Anspruch 1, wobei der durch die erste Speichereinrichtung (103) gespeicherte erste Kommunikationsparameter ein Kommunikationsparameter ist, der zuletzt aus durch die Bereitstelleinrichtung bereitgestellten Kommunikationsparametern bereitgestellt wurde.

3. Kommunikationsvorrichtung (401) nach Anspruch 1, wobei der zweite Kommunikationsparameter ein durch die Erzeugungseinrichtung erzeugter Kommunikationsparameter ist, der ein Chiffrierverfahren und/oder einen Chiffrierschlüssel und/oder ein Authentifizierungsverfahren und/oder einen Authentifizierungsschlüssel enthält.

4. Kommunikationsvorrichtung (401) nach Anspruch 1, ferner umfassend:
eine zweite Speichereinrichtung, ausgebildet zum Speichern eines Netzidentifikators des unter Verwendung des ersten Kommunikationsparameters aufgebauten ersten Netzes; und
eine Erfassungseinrichtung, ausgebildet zum Suchen nach einem benachbarten Netz und zum Erfassen eines Netzidentifikators, wobei
die Bestimmungseinrichtung ausgebildet ist zum Bestimmen, ob das unter Verwendung des ersten Kommunikationsparameters aufgebaute erste Netz vorhanden ist, basierend auf dem durch die zweite Speichereinrichtung gespeicherten Netzidentifikator und dem durch die Erfassungseinrichtung erfassten Netzidentifikator.

5. Kommunikationsvorrichtung (401) nach Anspruch 4, wobei der durch die zweite Speichereinrichtung gespeicherte Netzidentifikator ein durch eine Vorrichtung, die das erste Netz unter Verwendung des ersten Kommunikationsparameters aufgebaut hat, erzeugter Zufallswert ist.

6. Kommunikationsvorrichtung (401) nach Anspruch 1, ferner umfassend eine Messeinrichtung, ausgebildet zum Messen einer ab Bereitstellen des ersten Kommunikationsparameters durch oder für die Kommunikationsvorrichtung verstrichenen Zeit, wobei
die Bereitstellungseinrichtung ausgebildet ist zum Bereitstellen des ersten Kommunikationsparameters für die zweite Vorrichtung (403), falls die Bestimmungseinrichtung bestimmt, dass das erste Netz vorhanden ist und die vorbestimmte Zeit ab Bereitstellen des ersten Kommunikationsparameters durch oder für die Kommunikationsvorrichtung nicht verstrichen ist, zum Bereitstellen des zweiten Kommunikationsparameters für die zweite Vorrichtung (403), falls die Bestimmungseinrichtung bestimmt, dass das erste Netz vorhanden ist und die vorbestimmte Zeit ab Bereitstellen des ersten Kommunikationsparameters durch oder für die Kommunikationsvorrichtung verstrichen ist, und zum Bereitstellen des zweiten Kommunikationsparameters für die zweite Vorrichtung, falls die Bestimmungseinrichtung bestimmt, dass das erste Netz nicht vorhanden ist.

7. Kommunikationsvorrichtung (401) nach Anspruch 1, ferner umfassend eine Messeinrichtung zum Messen einer ab Einstellen des ersten Kommunikationsparameters verstrichenen Zeit, wobei
die Bereitstellungseinrichtung ausgebildet ist zum Bereitstellen des ersten Kommunikationsparameters für die zweite Vorrichtung (403), falls die Bestimmungseinrichtung bestimmt, dass das erste Netz vorhanden ist und die vorbestimmte Zeit ab Einstellen des ersten Kommunikationsparameters nicht verstrichen ist, zum Bereitstellen des zweiten Kommunikationsparameters für die zweite Vorrichtung (403), falls die Bestimmungseinrichtung bestimmt, dass das erste Netz vorhanden ist und die vorbestimmte Zeit ab Einstellen des ersten Kommunikationsparameter verstrichen ist, und zum Bereitstellen des zweiten Kommunikationsparameters für die zweite Vorrichtung (403), falls die Bestimmungseinrichtung bestimmt, dass das erste Netz nicht vorhanden ist.

8. Kommunikationsvorrichtung (401) nach Anspruch 1, wobei die Bereitstellungseinrichtung ausgebildet ist zum Bereitstellen eines Kommunikationsparameters, falls ein Benutzer anweist, dass ein automatischer Kommunikationsparametereinstellvorgang gestartet werden soll oder falls eine Drahtloskommunikationseinheit der Kommunikationsvorrichtung aktiviert ist.

9. Kommunikationsvorrichtung (401) nach Anspruch 1, ferner umfassend eine Anweisungseinrichtung, ausgebildet zum Übertragen einer Anweisung, einen Energiesparmodus der ersten Vorrichtung zu beenden, wobei
die Bestimmungseinrichtung ausgebildet ist zum Durchführen der Bestimmung, nachdem die Anweisung für einen Energiesparmodus der ersten Vorrichtung durch die Anweisungseinrichtung übertragen worden ist.

10. Kommunikationsverfahren einer Kommunikationsvorrichtung (401), umfassend die Schritte:
Ausführen eines automatischen Kommunikationsparametereinstellvorgangs zwischen der Kommunikationsvorrichtung und einer ersten Vorrichtung;
Speichern in einer Speichereinrichtung eines ersten Kommunikationsparameters, der durch den automatischen Kommunikationsparametereinstellvorgang zwischen der Kommunikationsvorrichtung und der ersten Vorrichtung mitgeteilt worden ist, wobei der erste Kommunikationsparameter zum Verbinden mit einem ersten Netz vorgesehen ist und ein Chiffrierverfahren und/oder einen Chiffrierschlüssel und/oder ein Authentifizierungsverfahren und/oder einen Authentifizierungsschlüssel enthält;
Bestimmen, falls der erste Kommunikationsparameter in der Speichereinrichtung (103) gespeichert ist, ob das erste, unter Verwendung des ersten Kommunikationsparameter aufgebaute Netz vorhanden ist; und
Bereitstellen des ersten Kommunikationsparameters für eine zweite Vorrichtung (403), falls im Bestimmungsschritt bestimmt wird, dass das erste Netz vorhanden ist, und Bereitstellen eines zweiten Kommunikationsparameters zum Verbinden des zweiten Netzes mit der zweiten Vorrichtung, falls bestimmt wird, dass das erste Netz nicht vorhanden ist.

11. Computerlesbares Speichermedium, das beim Ausführen auf einem Computer diesen veranlasst, die Schritte des Kommunikationsverfahrens nach Anspruch 10 auszuführen.

## Revendications

1. Appareil de communication (401) comprenant:
un moyen d'exécution conçu pour exécuter un processus automatique de définition des paramètres de communication entre l'appareil de communication et un premier appareil (42) ;
un premier moyen de stockage (103) conçu pour stocker un premier paramètre de communication partagé entre l'appareil de communication et le premier appareil par le processus automatique de définition des paramètres de communication exécuté par le moyen d'exécution, dans lequel le premier paramètre de communication est destiné à rejoindre un premier réseau et comprend au moins un des éléments suivants : procédé de chiffrement, clef de chiffrement, procédé d'authentification et clef d'authentification; et
un moyen de détermination conçu pour déterminer, si le premier paramètre de communication est stocké dans le moyen de stockage (103), s'il existe un premier réseau établi à l'aide du premier paramètre de communication ;
un moyen de création conçu pour créer un second réseau, différent du premier réseau, lorsque le moyen de détermination détermine que le premier réseau n'existe pas ; et
un moyen de fourniture, conçu pour fournir le premier paramètre de communication à un second appareil (403) si le moyen de détermination détermine que le premier réseau existe, et pour fournir au second appareil (403) le second paramètre de communication, qui est différent du premier paramètre de communication et qui est utilisé pour rejoindre le second réseau, si le moyen de détermination détermine que le premier réseau n'existe pas.

2. Appareil de communication (401) selon la revendication 1, dans lequel le premier paramètre de communication stocké par le premier moyen de stockage (103) est un paramètre de communication qui a été le dernier fourni parmi des paramètres de communication fournis par le moyen de fourniture.

3. Appareil de communication (401) selon la revendication 1, dans lequel le second paramètre de communication est un paramètre de communication créé par le moyen de création, qui comprend au moins un des éléments suivants: procédé de chiffrement, clef de chiffrement, procédé d'authentification et clef d'authentification.

4. Appareil de communication (401) selon la revendication 1, comprenant en outre:
un second moyen de stockage, conçu pour stocker un identificateur de réseau pour le premier réseau, établi à l'aide du premier paramètre de communication ; et
un moyen d'obtention, conçu pour rechercher un réseau voisin et pour obtenir un identificateur de réseau;
dans lequel:
le moyen de détermination est conçu pour déterminer si le premier réseau établi à l'aide du premier paramètre de communication existe, en fonction de l'identificateur de réseau stocké par le second moyen de stockage et l'identificateur de réseau obtenu par le moyen d'obtention.

5. Appareil de communication (401) selon la revendication 4, dans lequel l'identificateur de réseau stocké par le second moyen de stockage est une valeur aléatoire produite par un appareil qui a établi le premier réseau à l'aide du premier paramètre de communication.

6. Appareil de communication (401) selon la revendication 1, comprenant en outre un moyen de mesure conçu pour mesurer le temps écoulé depuis l'instant où l'appareil de communication a fourni ou a reçu le premier paramètre de communication ;
dans lequel le moyen de fourniture est conçu pour fournir le premier paramètre de communication au second appareil (403) si le moyen de détermination détermine que le premier réseau existe et si le temps prédéterminé ne s'est pas écoulé depuis l'instant où l'appareil de communication a fourni ou a reçu le premier paramètre de communication, pour fournir le second paramètre de communication au second appareil (403) si le moyen de détermination a déterminé que le premier réseau existe et si le temps prédéterminé s'est écoulé depuis l'instant où l'appareil de communication a fourni ou a reçu le premier paramètre de communication, et pour fournir le second paramètre de communication au second appareil si le moyen de détermination a déterminé que le premier réseau n'existe pas.

7. Appareil de communication (401) selon la revendication 1, comprenant en outre un moyen de mesure conçu pour mesurer le temps écoulé depuis l'instant où le premier paramètre de communication a été défini ;
dans lequel le moyen de fourniture est conçu pour fournir le premier paramètre de communication au second appareil (403) si le moyen de détermination détermine que le premier réseau existe et si le temps prédéterminé ne s'est pas écoulé depuis l'instant où le premier paramètre de communication a été défini, pour fournir le second paramètre de communication au second appareil (403) si le moyen de détermination a déterminé que le premier réseau existe et si le temps prédéterminé s'est écoulé depuis l'instant où le premier paramètre de communication a été défini, et pour fournir le second paramètre de communication au second appareil (403) si le moyen de détermination a déterminé que le premier réseau n'existe pas.

8. Appareil de communication (401) selon la revendication 1, dans lequel le moyen de fourniture est conçu pour fournir un paramètre de communication si un utilisateur ordonne de lancer un processus automatique de définition des paramètres de communication ou si une unité de communication sans fil de l'appareil de communication est activée.

9. Appareil de communication (401) selon la revendication 1, comprenant en outre un moyen de fourniture d'instructions, conçu pour transmettre une instruction d'annulation d'un mode d'économie d'énergie du premier appareil ;
dans lequel le moyen de détermination est conçu pour effectuer la détermination après que l'instruction visant le mode d'économie d'énergie du premier appareil a été transmise par le moyen de fourniture d'instructions.

10. Procédé de communication d'un appareil de communication (401), comprenant les étapes consistant à :
exécuter un processus automatique de définition des paramètres de communication entre l'appareil de communication et un premier appareil ;
stocker, dans un moyen de stockage, un premier paramètre de communication partagé entre l'appareil de communication et le premier appareil par le processus automatique de définition des paramètres de communication, le premier paramètre de communication étant utilisé pour rejoindre un premier réseau et comprenant au moins un des éléments suivants: procédé de chiffrement, clef de chiffrement, procédé d'authentification et clef d'authentification; et
déterminer, si le premier paramètre de communication est stocké dans le moyen de stockage (103), s'il existe un premier réseau établi à l'aide du premier paramètre de communication ;
fournir le premier paramètre de communication à un second appareil (403) s'il est déterminé dans l'étape de détermination que le premier réseau existe, et fournir un second paramètre de communication, qui est utilisé pour joindre le second réseau au second appareil (403), s'il est déterminé que le premier réseau n'existe pas.

11. Support de stockage lisible par ordinateur, portant un programme d'ordinateur qui, lorsqu'il est exécuté sur un ordinateur, amène l'ordinateur à exécuter les étapes du procédé de communication selon la revendication 10.
